# EUROPEAN PATENT APPLICATION

(11) **EP 0 965 270 A2**
(43) Date of publication of application: **22.12.1999**
(21) Application number: 99500078.3
(22) Date of filing: 13.05.1999
(51) Int. Cl.: A21C 15/04

(54) **A machine for preparing food products in superposed slices**

(30) Priority: 28.05.1998 ES 9801120
(71) Applicant: Equipos Para Manutencion y Obras S.A., 08840 Viladecans (ES)
(72) Inventor: Valle Fillat, Angel, 08784 Piera (Barcelona) (ES); Garcia Torres, Ramon, 08840 Vildecans (Barcelona) (ES)
(74) Representative: Ponti Sales, Adelaida

(57) **Abstract**

It comprises a work bench (1), a movable frame (2), means (3) for actuating the frame (2), cutting means (4), vertical feeding means (5) of the food product to be prepared (6) mounted fixed to the work bench (1), and means (7) for delivering the finished product. The cutting means (4) comprise at least one continuous belt-saw (9) arranged transversally to the direction of motion of the movable frame (2) and taking up substantially the whole width of the work bench (1). The belt-saw (9) is associated to the movable frame (2) in such a way that it moves with it. Furthermore, a conveyor belt (17) for the finished product (17) is provided independently of the machine, and it is provided with driving means, which are independent of the driving means of the machine.

## Description

The present invention refers to a machine for preparing food products in superposed slices, especially for preparing solid and semi-liquid food products placed on an edible base, such as pizzas, sandwiches and the like, from solid food products provided in bar shape and/or semi-liquid products provided in bulk.

### BACKGROUND OF THE INVENTION

The preparation of food products made of various layers or slices, such as the ones mentioned above, is normally done manually; the operators place the previously cut slices piling up in a suitable way several layers or slices of different food types on a base of a food product like, for instance, bread.

It is obvious that the manual preparation of food products according to the way described above presents many disadvantages. The main disadvantage is the fact that the labour cost influences negatively the final cost of the product, especially when it refers to very elaborated food products, made by a lot of slices. Furthermore, the handling by the operator in the chain for processing the slices is not accurate, resulting in the layers defined by the food product slices not being appropriately arranged on each other, which requires additional staff to place correctly the slices that have not been perfectly laid down. It will be understood that this disadvantage is even more important when the food products to be handled are semi-liquid.

The state of the art provides some solutions to these disadvantages, which consist, for instance, of a machine provided with means for cutting the food product in order to deliver it in the form of superposed slices. However, this type of machine presents the disadvantage of the absence of a continuous feeding system for the product to be cut. Furthermore, these machines do not succeed in replacing labour totally due to the fact that operators are required for finishing the preparation of the product by piling up the slices.

Another solution, also comprised in the state of the art, consists of a machine provided with cutting means and means for feeding the food product, which feeding means consist of a series of oscillating loaders mounted in a fixed workbench, inside which is placed the product to be cut and delivered. The swinging and oscillating movement of said loaders of food products creates a movement that alternatively brings near and separates the food product with regard to a blade fixed in the work bench of the machine. In practice these machines present the big disadvantage of the difficulty of refilling the loaders when the product inside them runs out, due to the oscillating movement of the loaders; in some cases it is required to stop the machine, especially when dealing with products having a soft consistency. These breaks imply a considerable loss of time and an increase in the cost of the finished product. Furthermore, it should be noted that the structural arrangement of the machines described above implies the construction of workbenches of considerably big dimensions in order to cope with the oscillating movement of the loaders. Another disadvantage found in these type of machines is the fact that the slices do not lay appropriately on each other such that, again, the presence of additional labour is required to place the slices of food product correctly.

In the field of food products processing it is also known a type of cutting machine comprising a fixed work bench provided with a movable frame that can move horizontally with a reciprocating movement, means for actuating the frame, cutting means located in said frame, vertical feeding means for the food product to be prepared which are fixed to the work bench, and delivering means for the finished product. The cutting means consist of a plurality of circular blades or discs rotatably mounted on the workbench and they are located adjacent to the food product to be cut; the cutting means are rotatably driven by independent electrical motors. The motion of the frame of the machine causes a corresponding displacement of the blades in such a way that each blade approaches each loader causing the cut of a slice of product which then falls on a conveyor belt whose movement is foreseen in combination with the reciprocating of the movable frame.

It has been demonstrated that the use of this type of machines is considerably limited to a certain types of products. In particular, the cutting machines of this type are not able to cut food products of large dimensions, the maximum width of the products to be cut being a function of the diameter of the blade. Indeed, the thickness of the blade must remain very small in order to allow maximum accuracy when performing the cut. However, when cutting food products with a large diameter the cut becomes imprecise due mainly to the large diameter of the blades used therefor because they are subjected to a flexing stress having a negative influence on the performance of the cut. Furthermore the manufacture of cutting discs is limited to discs having a relatively small diameter in order to avoid, as mentioned above, their flexion during the cutting operation. Therefore the size of the products to be cut is considerably limited to the dimensions with which the cutting blades are built.

Another disadvantage of the use of this type of cutting machines is that they are very expensive. Even if it is possible to use a single blade acting on more than one loader, i.e., to use a single blade to cut several products simultaneously, each cutting station still requires a blade and, therefore, a driving motor. It is obvious that the provision of several blades and driving motors makes these machines expensive to run and to maintain.

Finally, the arrangement of the cutting means in this type of machines is such that the driving motors of the blades are excessively close to the food product. This has a negative impact on the sanitary conditions of the product because the blade and/or the food product can get dirty due to the operation of the motor.

### DESCRIPTION OF THE INVENTION

The objective of the machine for preparing food products in superposed slices according to the invention is to solve the disadvantages of the devices known in the state of the art and to provide a finished product according to the demand of the productive process in this type of food products.

The peculiarities of the machine according to the invention, which will be described below, provide it with considerable advantages with respect to the machines comprised in the state of the art being currently used for a similar purpose.

This objective and other objectives described below are reached with a machine for preparing food products in superposed slices according to the invention.

The machine for preparing food products according to the present invention is of the type comprising a fixed work bench provided with a movable frame, means for actuating the frame, cutting means located in said frame, vertical feeding means for feeding the food product to be prepared which are mounted fixed to the work bench, and means for delivering the finished product.

The particularity of the machine according to the invention resides in that the cutting means comprise at least one continuous saw belt arranged transversally to the direction of motion of the movable frame, which takes up substantially the whole width of the work bench. Said cutting belt is associated to the movable frame in such a way that it moves with it.

The provision of a continuous belt-saw allows the cutting of large width products with high accuracy. The thickness of the belt-saw can be, in this case, considerably smaller than the thickness of the cutting disks used by the known cutting machines, because the flexing stress is smaller due to the smaller surface of cutting material compared with the case in which disk blades are used.

According to one feature of the invention, the actuating means of the frame comprise a mechanism defined by a disk that drives eccentrically a connecting rod which is kinematically connected to said frame and thus imparts an horizontal reciprocating movement to said frame.

Preferably, the disk is rotatably driven by a geared motor having a speed controller, adjusted depending on the properties of the product to be cut.

According to another feature of the machine for preparing food products according to the present invention, the frame advantageously includes a plurality of plates for supporting the food product, which are arranged in correspondence with the outlet of each one of said vertical feeding means.

In this way, the food product located inside each feeding means can be supported appropriately by said plates, enabling the portion of the product between the outlet of the feeding means and the supporting plates to be cut in slices.

The machine according to the invention comprises also means to adjust the height of the belt-saw with regard to the frame in order to be able to cut slices of food products having different thickness.

Thanks to this feature, the present invention provides a very versatile machine, which is able to be adapted to the requirements in the production of food made of layers or slices of food products.

In addition, the vertical feeding means for the food product comprise a plurality of tubular elements, built according to the morphology of the product, arranged fixed to the workbench. Said feeding means include means for adjusting the position of the tubular elements with regard to the workbench.

In this way, the distance between adjacent feeding stations can be adjusted appropriately in order to achieve a graded slice delivery.

Preferably the means for delivering the finish product comprise an endless conveyor belt independent from the machine, with driving means independent from those of the machine.

The provision of an independent conveyor belt allows easy machine maintenance and cleaning which reduce its maintenance cost.

### BRIEF DESCRIPTION OF THE DRAWINGS

In order to make the above description easier to understand, an embodiment of the machine according to the invention in shown diagrammatically, by way of nonlimiting example, in the attached figures, in which:
Figure 1 is a side elevation view of the machine according to the invention;
Figure 2 is a plan view corresponding to Figure 1;

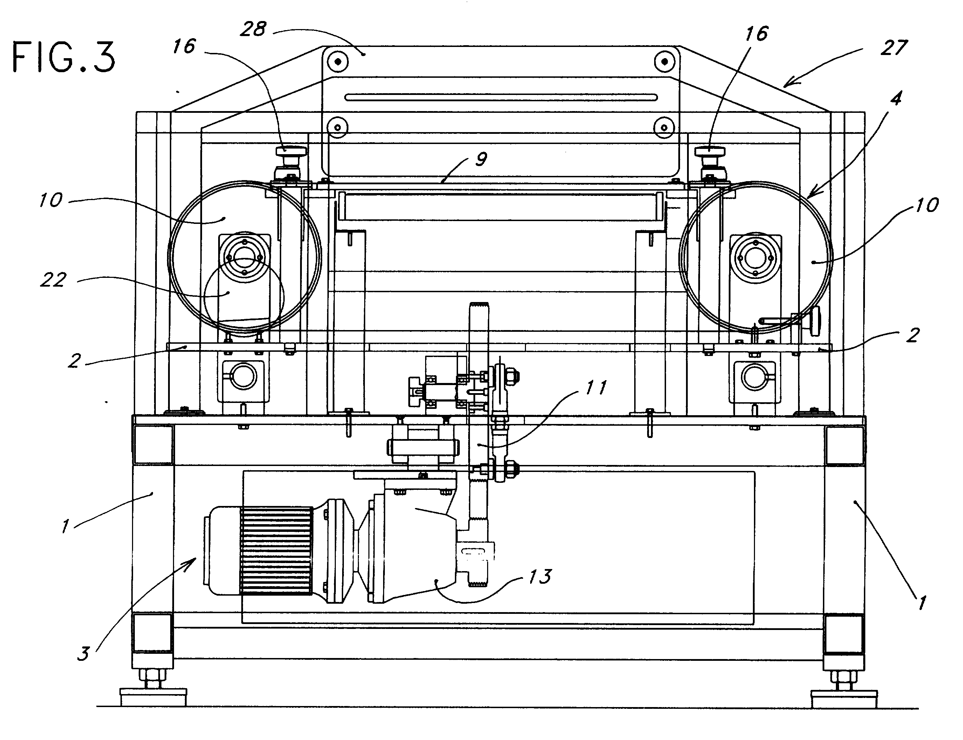

Figure 3 is a front elevation view of the machine according to the invention;
Figure 4 is a side elevation view of the machine in which the means for feeding the product and the cutting means are shown in a first position in which the movable frame has not performed the cut yet; and
Figure 5 is a side elevation view of the machine where the means for feeding the product and the cutting means are shown in a second position in which the movable frame has performed the cut of the food product and the correspondent slices have been made.

### DESCRIPTION OF A PREFERRED EMBODIMENT

An embodiment of the present invention is disclosed in the attached Figures in which the machine according to the invention comprises a fixed work bench 1;
a movable frame 2, which is able to move horizontally in a reciprocating motion; actuating means 3 of the movable frame 2; cutting means 4 appropriately arranged on said movable frame 2; vertical feeding means 5 for the food product 6; and delivering means 7 for delivering the finished product 8.

The cutting means 4 of the machine according to the invention, in the embodiment disclosed in the figures, consist of two cutting belts 9 arranged transversally to the direction of motion of the movable frame 2. The belt-saws 9 are arranged in such a way that they take up substantially the whole width of the workbench 1 and they are driven by means of respective pulleys 10. The cutting means 4 move transversally with regard to the machine because they are fixed to the movable frame 2, and they move together with it during the cutting operation.

The actuating means 3 of the frame 2 comprise a mechanism formed by a disk 11 that drives eccentrically a connecting rod 12 which is kinematically connected to the frame 2. This mechanism transforms the rotation of the disk 11 into the reciprocating movement of the frame 2.

The disk 11 is rotatably driven by a geared motor 13 having a speed controller allowing the machine to perform a continuous or intermittent cut.

The frame 2 includes a plurality of plates 14 for supporting the food product 6. These supporting plates 14 are arranged in correspondence with the outlet 15 of each of said vertical feeding means 8 enabling the product 6 to be perfectly supported on the surface of said plates 14.

The machine comprises also means 16 for adjusting the height of the belt-saw 9 with regard to the frame 2 in order to enable the formation of slices of different thickness. Said means 16 consist of screw mechanisms controlled mechanically or electrically.

The means 7 for delivering the finished product 8 comprise a conveyor belt 17 arranged below the movable frame 2. Said belt 17 is independent of the machine and is provided with its own driving means 18.

The vertical feeding means 5 of the food product 6 are mounted fixed to the frame 2 of the machine and they comprise a plurality of tubular elements 19 whose shape is adapted to the characteristics of the product. Said food product 6 is arranged inside said tubular elements and it slides inside the tubular element by gravity until the food product rests on the corresponding support plate 14. Said vertical feeding means 5 of the food product 6 comprise, furthermore, means 20 for adjusting the position of said tubular elements with regard to the work bench according to the characteristics of the food product.

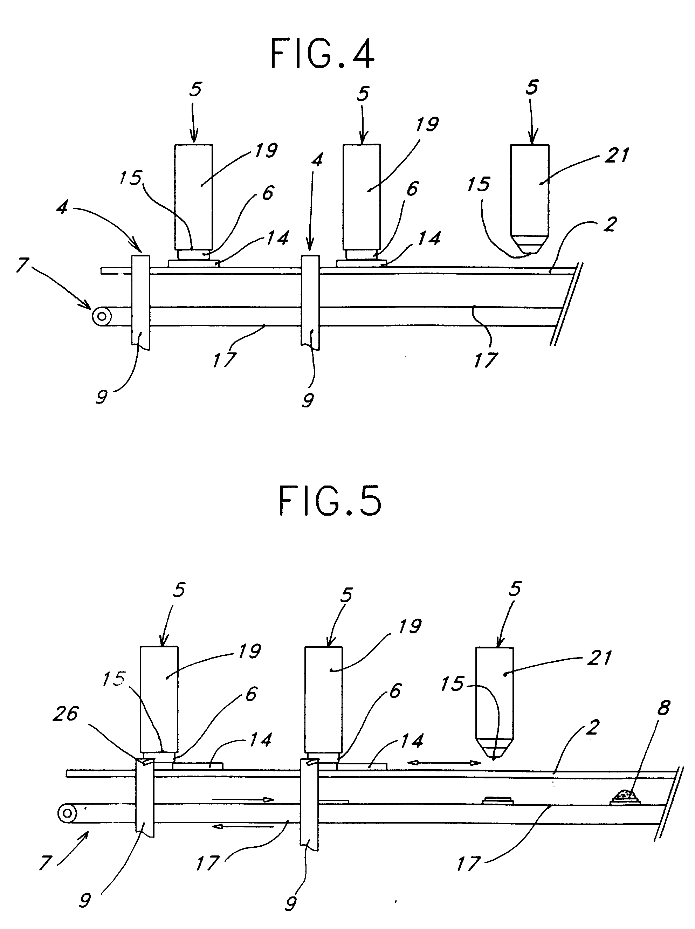

The operation of the machine according to the invention will now be described, referring especially to figures 4 and 5.

The solid food product to be cut is arranged inside each loader 19 and the semi-liquid product is arranged in each loader 21.

In figure 5 is shown how the belt-saw begins to cut simultaneously the products contained in the four loaders 19,21 transversally fixed to the machine. For this purpose, the distance D between the pulleys 10 is adjusted appropriately to the number of loaders arranged in each bridge or loading station. The cut of said products is done in the form of slices the thickness of which is preset by the operator through the means 16 for adjusting the height of the cutting belt.

Each of two electric motors 22,23, arranged laterally in the workbench, below the working plan, drives the rotation of a cutting belt 9 respectively through the rotation of pulleys 10, while they move longitudinally along the machine together with the frame 2. The motion of the frame 2 causes the blade 9 to move longitudinally along guides 24,25 and to be introduced in the portion of the product 6 that protrudes from the outlet 15 of each loader 19. When the blade 9 has crossed completely the portion of the product 6 comprised between the outlet of each loader and its respective supporting plate 14, the produced slice 26 falls directly on the conveyor belt or on another slice formed by the cut of food product from an adjacent previous loader 19.

Due to the reciprocating motion generated by the driving means 3, the backward movement of the movable frame 2 causes the food product 6 to slide again inside the loader 5 by gravity until it reaches again the surface of the respective support plate 14. The cutting process is then repeated as described above.

In this way the machine according to the invention performs quickly and precisely the preparation of food products 8 formed by slices or layers, by means of the cut of solid food products arranged in loaders 19, and delivers semi-liquid food products contained in other loaders 21, which are able to dose the required amount depending on the food being prepared.

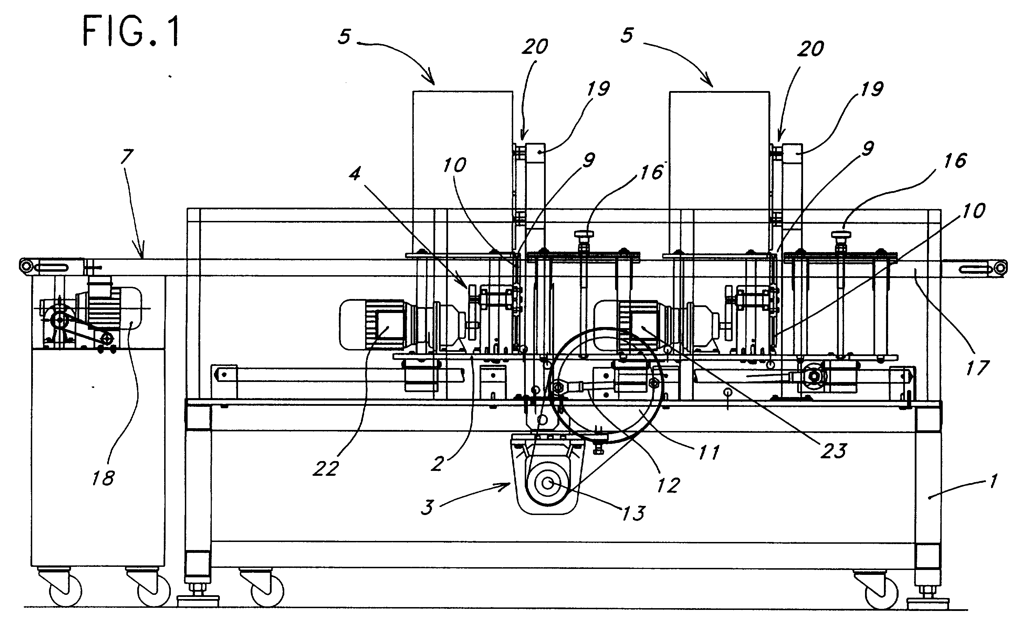

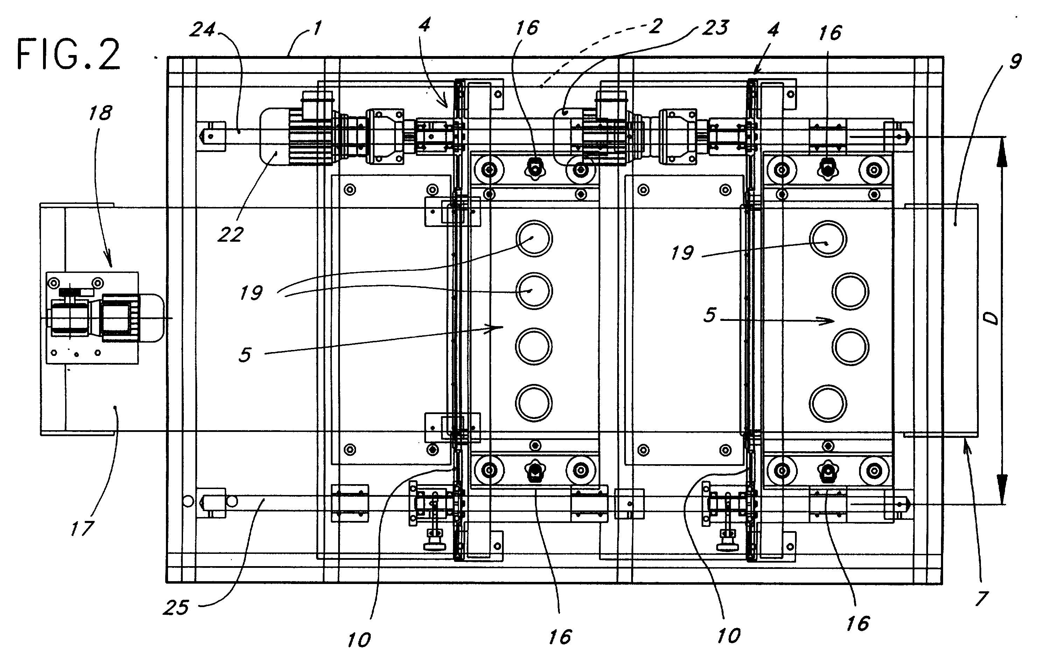

As shown in figures 1 and 2, the motors 24,25 are located substantially far from the loaders 19,21 preventing dirty particles from entering in contact with the food product.

For security reasons, the machine includes also means 27 to protect the user consisting in a cover 28 enclosing the upper part of the workbench which prevents the user from accessing the elements of the machine such as the cutting belt while it is running.

An embodiment of a machine for preparing food products in superposed slices has been described; the machine comprises a fix work bench provided with a movable frame, cutting means arranged in the frame, four tubular loaders where the food product to be prepared is arranged, and means for delivering the finished product; it will be obvious for the man skilled in the art, however, that the number of loaders 19,21 can be changed depending on the requirements of the production process, and that the distance D between the pulleys 10 of the cutting belt 9 can be adjusted according to the existing number of loaders.

The object of the present invention is independent of the materials used in the manufacture of the described machine and of the elements constituting the machine. The object of the invention is also independent of the shape, dimensions and accessory details of the machine, which can be replaced appropriately by others being technically equivalent, as far as they do not affect the essence of the invention or they do not depart from the scope defined by the attached claims. It will also be understood that the geometry of the loaders 19,21 can be adapted to the particular characteristics of the products contained in them.

## Claims

1. A machine for preparing food products (8) in superposed slices, comprising a fixed work bench (1) provided with a movable frame (2), means (3) for actuating the frame (2), cutting means (4) arranged in said frame (2), vertical feeding means (5) for the food product to be prepared (6) which are mounted fixed to the work bench (1), and means (7) for delivering the finished product (8), **characterised in that** the cutting means (4) comprise at least one continuous belt-saw (9) arranged transversally to the direction of motion of the movable frame (2) and taking up substantially the whole width of the work bench (1), said belt-saw (9) being associated to the movable frame (2) in such a way that it moves with it.

2. A machine according to claim 1, characterised in that the means (3) for actuating the frame (2) comprise a mechanism defined by a disk (11) that drives eccentrically a connecting rod (12) which is kinematically connected to said frame (2) and thus imparts an horizontal reciprocating movement to said frame.

3. A machine according to claim 2, characterised in that the disk (11) is rotatably driven by a geared motor (13) having a speed controller.

4. A machine according to claim 1, characterised in that the frame (2) comprises a plurality of support plates (14) for the food product (6) arranged in correspondence with the outlet (15) of each one of said vertical feeding means (5).

5. A machine according to claim 1, characterised in that it comprises means (16) for adjusting the height of the belt-saw (9) with regard to the frame (2) to vary the thickness of the cut of the food product being cut.

6. A machine according to claim 1, characterised in that the vertical feeding means (5) of the food product (6) comprise a plurality of tubular elements (19,21) whose shape is adapted to the characteristics of the food product (6), arranged fixed to the work bench (1), comprising furthermore means (20) for adjusting the position of said tubular elements (19,21) with regard to the work bench (1) according to the characteristics of said food product (6).

7. A machine according to claim 1, characterised in that the means (7) for delivering the finished product (8) comprise a conveyor belt (17) which is independent of the machine and having driving means (18) which are independent of the driving means of the machine.
